# EUROPEAN PATENT APPLICATION

(11) **EP 2 314 181 A1**
(43) Date of publication of application: **27.04.2011**
(21) Application number: 08809189.7
(22) Date of filing: 21.08.2008
(51) Int. Cl.: A47F 5/00, G06Q 50/00

(54) **ELECTRONIC SHELF LABEL SYSTEM, COMMODITY PRICE MANAGEMENT DEVICE, PORTABLE TERMINAL DEVICE, ELECTRONIC SHELF LABEL DEVICE, COMMODITY PRICE MANAGEMENT METHOD, COMMODITY PRICE UPDATE METHOD, COMMODITY PRICE MANAGEMENT PROGRAM, AND COMMODITY PRICE UPDATE PROGRAM**

(71) Applicant: SII Data Service Corp., Chiba-shi, Chiba 261-8507 (JP)
(72) Inventor: OKABE, Akihiro, Chiba-shi Chiba 261-8507 (JP); KOBAYASHI, Yoshio, Chiba-shi Chiba 261-8507 (JP); ARAI, Isao, Chiba-shi Chiba 261-8507 (JP); SATO, Tatsuru, Chiba-shi Chiba 261-8507 (JP); AIHARA, Masahito, Chiba-shi Chiba 261-8507 (JP); TAKANO, Kaori, Chiba-shi Chiba 261-8507 (JP); KIKUCHI, Yoshiyuki, Chiba-shi Chiba 261-8507 (JP)
(74) Representative: Cloughley, Peter Andrew
(86) International application number: PCT/JP2008/064942
(87) International publication number: WO 2010/021051

(57) **Abstract**

Provided are an electronic shelf label system, a product price management device, a portable terminal device, an electronic shelf label device, a product price management method, a product price update method, a product price management program, and a product price update program, which are capable of changing display of an electronic shelf label in a place where the electronic shelf label is installed. A handy terminal (105) reads, from a shelf label (104), identification information of the shelf label (104), and transmits, to a communication controller (102), price information of a product that is input to the handy terminal (105) itself and the identification information of the shelf label (104). The communication controller (102) stores the identification information of the shelf label (104) and the price information in association with each other, updates the price information associated with the same identification information as the received identification information, as the received price information, and transmits the updated price information to the shelf label (104). The shelf label (104) displays the received price information.

## Description

### Technical Field

The present invention relates to an electronic shelf label system, a product price management device, a portable terminal device, an electronic shelf label device, a product price management method, a product price update method, a product price management program, and a product price update program.

### Background Art

In a conventional electronic shelf label system, in a case of changing information displayed on an electronic shelf label, such as price information, the information displayed on the electronic shelf label is changed through a product price management server installed in a back office of a store, which is located away from shelving of a sales floor in the store where a shelf label that is to undergo the change is installed (for example, Patent Document 1).
Patent Document 1: JP 2000-287798 A

### Disclosure of the Invention

### Problems to be solved by the Invention

However, in a case where display of the electronic shelf label is different from intended display and therefore the display content is changed, or in a case where the product displayed on the electronic shelf label is on a limited-time offer and therefore information displayed on the electronic shelf label, such as a price of the product, is changed, it is necessary to turn back from the sales floor to the back office of the store where the product price management server is installed and to use the product price management server for changing the information displayed on the electronic shelf label. This work forces store staff to go back and forth between the sales floor and the back office, resulting in higher workloads. Further, the display of the electronic shelf label is not changed unless the store staff member goes back and forth between the sales floor and the back office for displaying of the electronic shelf label, and hence customers may be charged at a price different from the display content before the display is changed, which possibly arouses customers' dissatisfaction.

The present invention has been made in order to solve the above-mentioned problems, and it is therefore an object thereof to provide an electronic shelf label system, a product price management device, a portable terminal device, an electronic shelf label device, a product price management method, a product price update method, a product price management program, and a product price update program, which are capable of changing display of an electronic shelf label in a place where the electronic shelf label is installed.

### Means for solving the Problems

The present invention provides an electronic shelf label system including: an electronic shelf label device for displaying price information of a product; a portable terminal device for inputting the price information; and a product price management device for managing the price information, in which the product price management device includes: storage means for storing identification information of the electronic shelf label device and the price information in association with each other; first reception means for receiving the identification information and the price information from the portable terminal device; update means for updating, in the price information stored in the storage means, a piece of the price information associated with the same identification information as the identification information received by the first reception means, as the price information received by the first reception means; and first transmission means for transmitting the price information updated by the update means to the electronic shelf label device, in which the portable terminal device includes: reading means for reading the identification information from the electronic shelf label device; input means for inputting the price information; and second transmission means for transmitting the identification information and the price information to the product price management device, and in which the electronic shelf label device includes: second reception means for receiving the price information transmitted from the product price management device; and display means for displaying the price information received by the second reception means.

Further, the present invention provides an electronic shelf label system including: an electronic shelf label device for displaying price information of a product; a portable terminal device for inputting the price information; and a product price management device for managing the price information, in which the product price management device includes: storage means for storing identification information of the electronic shelf label device and the price information in association with each other; first reception means for receiving the identification information and the price information from the portable terminal device; and update means for updating, in the price information stored in the storage means, a piece of the price information associated with the same identification information as the identification information received by the first reception means, as the price information received by the first reception means, in which the portable terminal device includes: reading means for reading the identification information from the electronic shelf label device; input means for inputting the price information; first transmission means for transmitting the identification information and the price information to the product price management device; and second transmission means for transmitting the price information to the electronic shelf label device, and in which the electronic shelf label device includes: second reception means for receiving the price information transmitted from the portable terminal device; and display means for displaying the price information received by the second reception means.

Further, the present invention provides a product price management device including: storage means for storing price information of a product, which is displayed on an electronic shelf label device, and identification information of the electronic shelf label device in association with each other; reception means for receiving the identification information and the price information from a portable terminal device for inputting the price information; and update means for updating, in the price information stored in the storage means, a piece of the price information associated with the same identification information as the identification information received by the reception means, as the price information received by the reception means.

Further, the present invention provides the product price management device further including transmission means for transmitting the price information updated by the update means to the electronic shelf label device.

Further, the present invention provides a portable terminal device including: reading means for reading, from an electronic shelf label device for displaying price information of a product, identification information of the electronic shelf label device; input means for inputting the price information; and first transmission means for transmitting the identification information and the price information to a product price management device for managing the price information.

Further, the present invention provides the portable terminal device further including second transmission means for transmitting the price information input to the input means to the electronic shelf label device.

Further, the present invention provides an electronic shelf label device including: reception means for receiving price information of a product, which is transmitted from a portable terminal device for inputting the price information; and display means for displaying the price information received by the reception means.

Further, the present invention provides a product price management method for a product price management device for managing price information of a product, the product price management method including: a reception step of receiving identification information of an electronic shelf label device for displaying the price information of the product, and the price information from a portable terminal device for inputting the price information; and an update step of updating, in the price information stored in storage means for storing the identification information and the price information in association with each other, a piece of the price information associated with the same identification information as the identification information received in the reception step, as the price information received in the reception step.

Further, the present invention provides the product price management method further including a transmission step of transmitting the price information updated in the update step to the electronic shelf label device.

Further, the present invention provides a product price update method for a portable terminal device for inputting price information of a product, the product price update method including: a reading step of reading, from an electronic shelf label device for displaying the price information of the product, identification information of the electronic shelf label device; an input step of inputting the price information; and a first transmission step of transmitting the identification information and the price information to a product price management device for managing the price information.

Further, the present invention provides the product price update method further including a second transmission step of transmitting the price information input in the input step to the electronic shelf label device.

Further, the present invention provides a product price management program for causing a computer to function as: storage means for storing price information of a product, which is displayed on an electronic shelf label device, and identification information of the electronic shelf label device in association with each other; reception means for receiving the identification information and the price information from a portable terminal device for inputting the price information; and update means for updating, in the price information stored in the storage means, a piece of the price information associated with the same identification information as the identification information received by the reception means, as the price information received by the reception means.

Further, the present invention provides the product price management program further causing the computer to function as transmission means for transmitting the price information updated by the update means to the electronic shelf label device.

Further, the present invention provides a product price update program for causing a computer to function as: reading means for reading, from an electronic shelf label device for displaying price information of a product, identification information of the electronic shelf label device; input means for inputting the price information; and first transmission means for transmitting the identification information and the price information to a product price management device for managing the price information.

Further, the present invention provides the product price update program further causing the computer to function as second transmission means for transmitting the price information input to the input means to the electronic shelf label device.

### Effects of the Invention

According to the present invention, the display of the electronic shelf label can be changed in the place where the electronic shelf label is installed.

### Brief Description of the Drawings

[FIG. 1] A configuration diagram illustrating a configuration of an electronic shelf label control system according to an embodiment of the present invention.
[FIG. 2] A block diagram of a communication controller according to the embodiment of the present invention.
[FIG. 3] A table of product master data according to the embodiment of the present invention.
[FIG. 4] A block diagram of a relay station according to the embodiment of the present invention.
[FIG. 5] A block diagram of a shelf label according to the embodiment of the present invention.
[FIG. 6] A block diagram of a handy terminal according to the embodiment of the present invention.
[FIG. 7] A diagram illustrating a shelf label display changing procedure in a case where the handy terminal is used according to the embodiment of the present invention.
[FIG. 8] A diagram illustrating the shelf label display changing procedure in the case where the handy terminal is used according to the embodiment of the present invention.
[FIG. 9] A diagram illustrating a shelf label display changing procedure in a case where a markup/markdown limiting function is used according to the embodiment of the present invention.
[FIG. 10] A table of product master data according to the embodiment of the present invention.
[FIG. 11] A diagram illustrating a shelf label display changing procedure in a case where an automatic calculation function for marked-down price is used according to the embodiment of the present invention.
[FIG. 12] A diagram illustrating the shelf label display changing procedure in the case where the automatic calculation function for marked-down price is used according to the embodiment of the present invention.

### Description of Symbols

- 101: server,
- 102: communication controller,
- 103: relay station,
- 104: shelf label,
- 105: handy terminal,
- 106: display

### Best Mode for carrying out the Invention

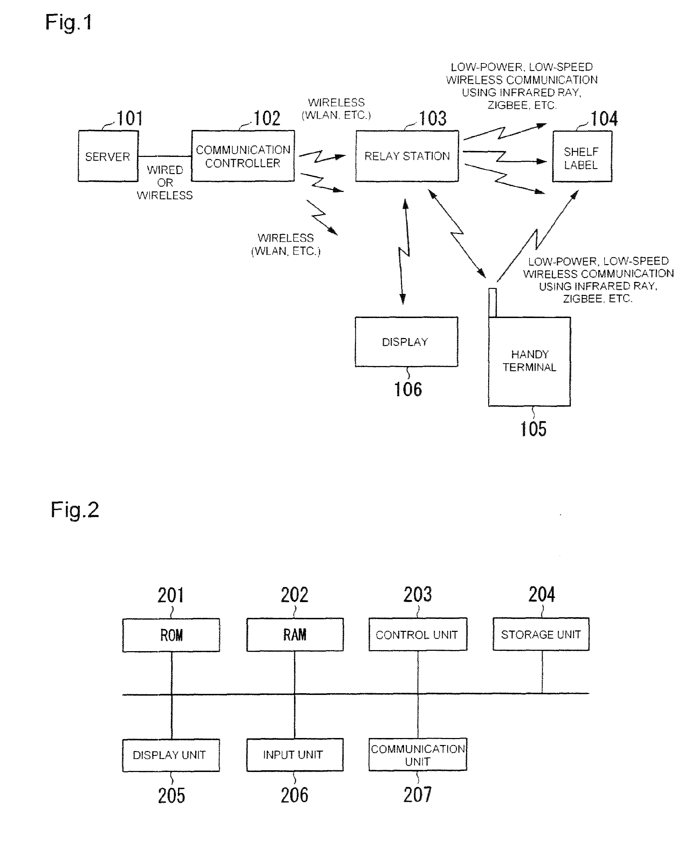

Hereinbelow, an embodiment of the present invention is described with reference to the drawings. FIG. 1 is a configuration diagram illustrating a configuration of an electronic shelf label control system according to the embodiment of the present invention. A server 101 holds product master data, product information, sales information, inventory information, and other information. In the example of the electronic shelf label control system of this embodiment, a POS system already installed in a store may be used as the server 101. A communication controller 102 acquires the product master data from the server 101, to thereby hold the same product master data as the server 101. The product master data is described later. Further, the communication controller 102 communicates with a shelf label 104, a handy terminal 105, and a display 106 via a relay station 103. There are a plurality of the relay stations 103 installed in the store, which transmit and receive data to and from the communication controller 102, the shelf label 104, the handy terminal 105, and the display 106. There are a large number of the shelf labels 104 installed on product shelves for the corresponding number of products. The shelf label 104 displays a product name, price information, and the like on a display unit thereof, based on the price information and the product information transmitted from the communication controller 102 and the handy terminal 105. The shelf label 104 has a barcode indicating an ID for identification. Instead of the barcode, the shelf label 104 may have an IC chip that stores an ID for identification. Each of the shelf labels 104 is assigned a different ID for identification, and by reading the barcode or the IC chip with the use of the handy terminal 105, the ID for identification may be checked. In many cases, the shelf label 104 only has a reception function as its communication function for the purpose of cost reduction. The handy terminal 105 is portable and held by store staff in the store. The handy terminal 105 is used as an input/output terminal in changing the display of the shelf label 104, and is capable of rewriting display information of the shelf label on site. Further, the handy terminal 105 is used as an input/output terminal in linking the shelf label 104 to a particular relay station 103. Still further, the handy terminal 105 is used as an input/output terminal in inputting a stock quantity of a product. Still further, the handy terminal 105 is capable of checking the stock quantity of a product. The display 106 is a larger type of the shelf label 104, and displays advertisement information. The display 106 acquires, from the communication controller 102, a larger amount of information for display than the shelf label 104, and therefore in many cases differs from the shelf label 104 in communication scheme.

Note that, an electronic shelf label device of the present invention corresponds to the shelf label 104, a portable terminal device of the present invention corresponds to the handy terminal 105, and a product price management device of the present invention corresponds to the communication controller 102. In this specification, the mention of transmission/reception between the handy terminal 105 and the communication controller 102 is assumed as transmission/reception performed via the relay station 103, unless noted otherwise.

FIG. 2 is a block diagram of the communication controller 102 according to the embodiment of the present invention. A control unit 203 reads a program stored in a ROM 201, and uses a RAM 202 as a work area therefor to transmit and receive necessary information in the product master data stored in a storage unit 204 via the relay station 103 to and from the shelf label 104, the handy terminal 105, and the display 106. The storage unit 204 stores the product master data. Further, the storage unit 204 stores a terminal identification number of the handy terminal 105 and a shelf label ID of a shelf label for which the handy terminal may make a change in association with each other. A display unit 205 displays processing that is being executed by the control unit 203. An input unit 206 is used by a user for inputting information such as the product master data. A communication unit 207 communicates with the server 101 when acquiring the product master information that is held by the server 101. Further, the communication unit 207 communicates with the server 101 when updating the product master information that is held by the server 101. Still further, the communication unit 207 communicates via the relay station 103 with the shelf label 104, the handy terminal 105, and the display 106.

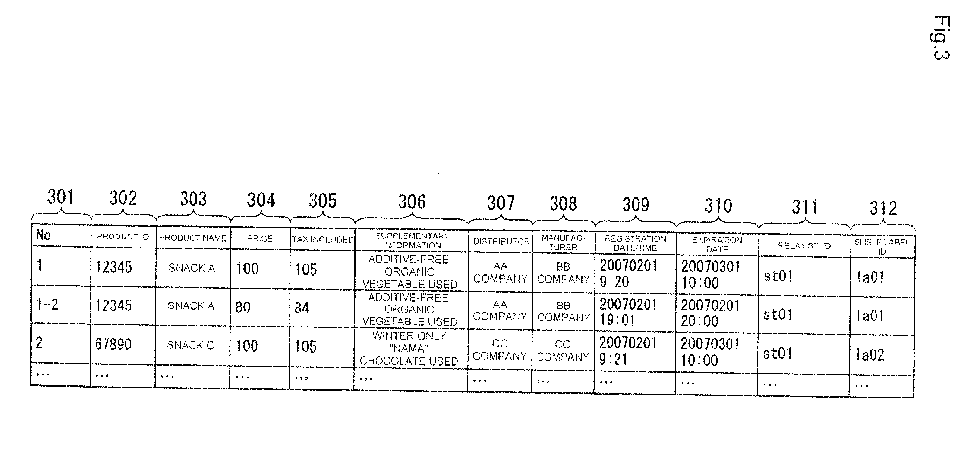

FIG. 3 is a table of the product master data according to the embodiment of the present invention. The product master data is stored in the server 101 and in the storage unit 204 of the communication controller 102. A "No." 301 is a number assigned to a product ID 302. In this embodiment, when information linked to the product ID 302 is updated, information is newly added without deleting previous information, and hence an increasing subnumber is appended every time the addition is made. Taking an example of a product having the product ID 302 of "12345", the "No." 301 is "1" at the time of initial registration. After that, the price is updated as 80 yen, and accordingly the "No." 301 of the product having the product ID 302 of "12345" is "1-2". As an effective "No." 301, the "No." 301 having a larger subnumber is given priority, and when an expiration date 310 is already reached, the "No." 301 having the second largest subnumber is given priority. For example, in the case of the product having the product ID 302 of "12345", information having the "No." 301 of "1-2" is used until 20:00 on February 1, 2007, and after 20:00 on February 1, 2007, information having the "No." 301 of "1" is used. As the product ID 302, one sequence of numbers is assigned to one kind of product. A product name 303 is a name of a product. A price 304 is a retail price of a product, excluding tax. A "tax included" 305 is a retail price of a product, including tax. Supplementary information 306 is supplementary information of a product. A distributor 307 is a name of a distributor of a product. A manufacturer 308 is a name of a manufacturer of a product. Registration date/time information 309 is a date and time when information is registered in the product master data. The expiration date 310 is an expiration date of information in a row indicated by the "No." 301. A relay st. ID 311 is an ID of the relay station 103 used when the communication controller 102 communicates with the shelf label 104. A shelf label ID 312 is an ID of the shelf label 104 used for a product indicated by the "No." 301.

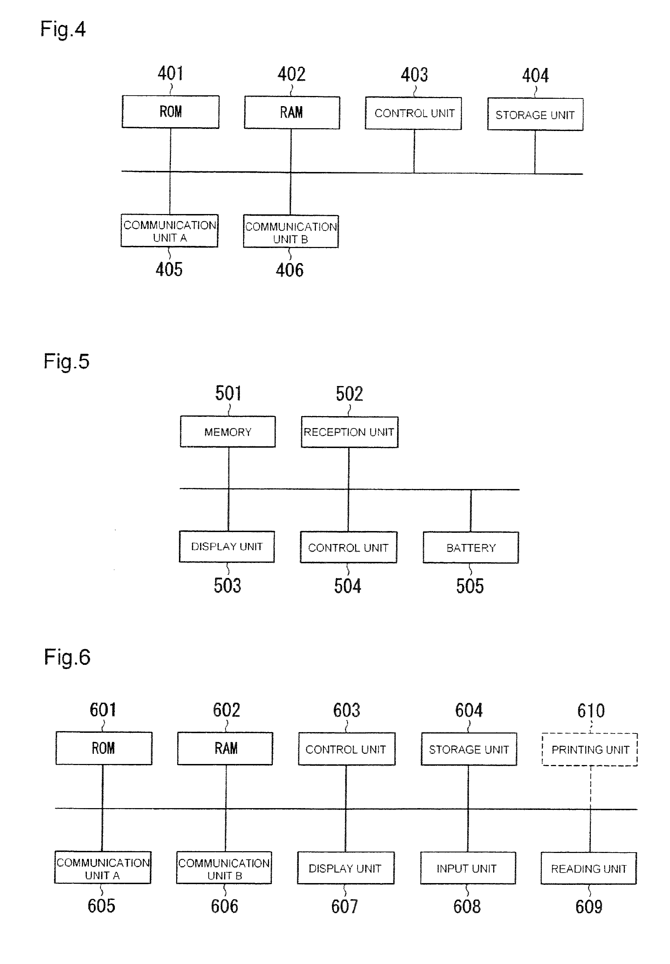

FIG. 4 is a block diagram of the relay station 103 according to the embodiment of the present invention. A storage unit 404 stores a table containing a shelf label ID and a communication scheme used by the shelf label. A control unit 403 reads a program stored in a ROM 401, and uses a RAM 402 as a work area therefor to select a communication unit to be used for communication with the communication controller 102 and with the shelf label 104, the handy terminal 105, and the display 106, based on the table of the storage unit 404. For example, in this embodiment, a communication unit A 405 is used for communication with the communication controller 102, the handy terminal 105, and the display 106 through, for example, a wireless LAN (WLAN). A communication unit B 406 is used for communication with the shelf label 104 through, for example, an infrared ray. Further, the number of the communication units A and B may be increased and decreased according to the used communication standards.

FIG. 5 is a block diagram of the shelf label 104 according to the embodiment of the present invention. A memory 501 stores information received by a reception unit 502. The reception unit 502 receives a product name, price information, and the like from the communication controller 102 and the handy terminal 105. A control unit 504 causes a display unit 503 to display the product name, the price information, and the like stored in the memory 501. In many cases, the display unit 503 is a segment type LCD for the purpose of cost reduction. There are also increasing cases of using memory liquid crystal for the purpose of further cost reduction. A battery 505 supplies electric power necessary to operate the shelf label 104.

FIG. 6 is a block diagram of the handy terminal 105 according to the embodiment of the present invention. A control unit 603 reads a program stored in a ROM 601, and uses a RAM 602 as a work area therefor to control communication with the communication controller 102 and the shelf label 104. A storage unit 604 stores the product master data that is received from the communication controller 102 in accordance with the purpose of use. A communication unit A 605 communicates with the relay station 103 through, for example, the WLAN. A communication unit B 606 communicates with the shelf label 104 through, for example, an infrared ray. The number of the communication units A and B may be increased and decreased according to the used communication standards. A display unit 607 displays contents stored in the storage unit 604 and information input through an input unit 608. The input unit 608 is used as input means for inputting price change information or stock quantity information. A reading unit 609 reads data from the barcode or the IC chip of the shelf label 104. A printing unit 610 may be mounted on the handy terminal 105, which prints discount information and the like on a sticker. Further, the printing unit 610 may perform printing only when discount is possible.

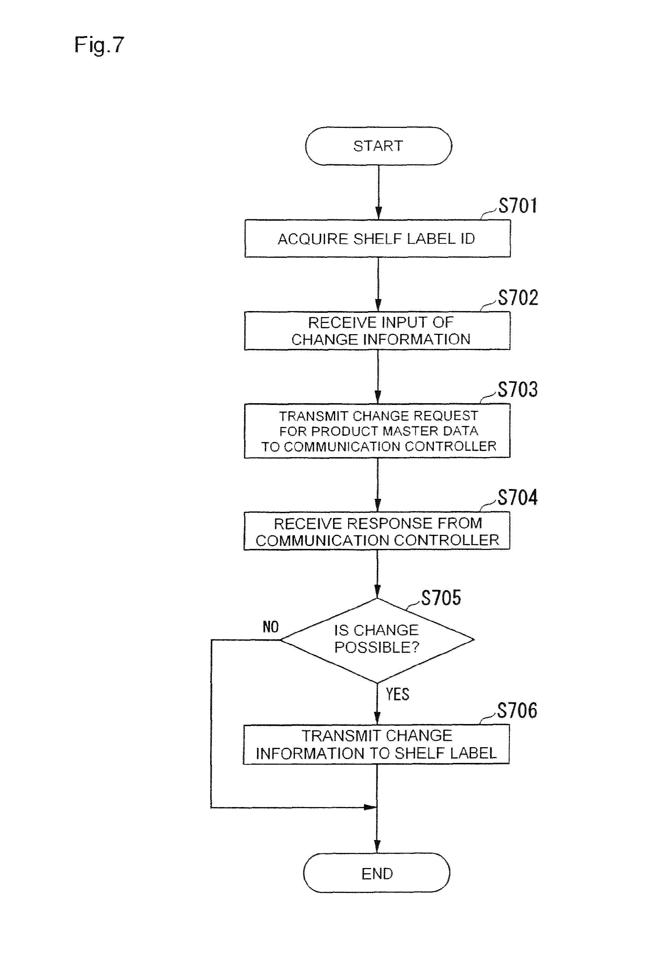

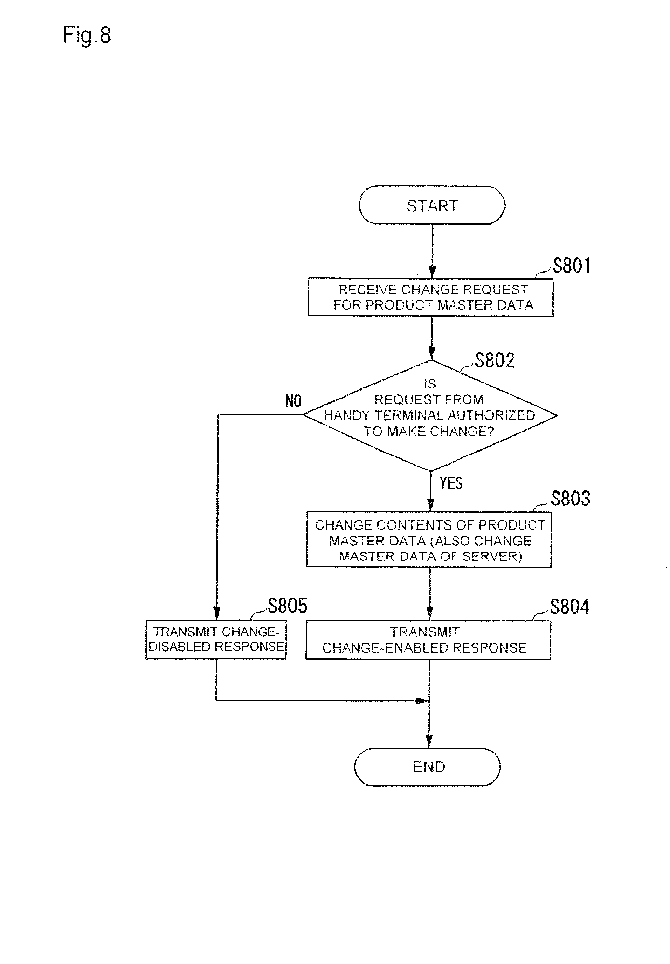

Next, referring to FIGS. 7 and 8 as appropriate, description is given of a procedure of changing display of the shelf label 104 by using the handy terminal 105 according to this embodiment. Referring to FIG. 7, description is first given of processing of the handy terminal 105. First, a store staff member uses the handy terminal 105 for acquiring an ID for identification of the shelf label 104. In the internal operation of the handy terminal 105, the reading unit 609 reads the barcode of the shelf label 104 that is to undergo the change of display, to thereby acquire the ID for identification (Step S701). Subsequently, the store staff member inputs price information indicating a changed price to the input unit 608. The input unit 608 receives the input of the price information (Step S702). Subsequently, the control unit 603 transmits a change request containing the price information, the ID for identification, and the terminal identification number of the handy terminal 105 via the communication unit A 605 to the communication controller 102. Subsequently, the control unit 603 receives a response message to the change request via the communication unit A 605 from the communication controller 102 (Step S704). Subsequently, the control unit 603 determines whether or not the change can be made, based on the response message received from the communication controller 102 (Step S705). When the change can be made, the communication unit B 606 transmits the price information to the shelf label 104 (Step S706), and the processing ends. When the change cannot be made, the processing ends. Note that, in a case where the printing unit 610 is mounted on the handy terminal 105, discount information and the like may be printed on a sticker as processing subsequent to Step S706.

Next, referring to FIG. 8, description is given of processing of the communication controller 102. First, the communication unit 207 of the communication controller 102 receives the change request transmitted from the communication unit A 605 of the handy terminal 105. Subsequently, the control unit 203 of the communication controller 102 determines whether or not the handy terminal 105 that has transmitted the change request is authorized to make the change (Step S802). For this determination, a list stored in the storage unit 204 is used. In this list, the terminal identification number of the handy terminal is associated with the shelf label ID of the shelf label 104 for which the change of the display price is permitted. The list thus stored is created by, for example, the communication controller 102 or the server 101. When the set of the terminal identification number and the shelf label ID that are contained in the change request transmitted from the handy terminal 105 matches with the set of the terminal identification number and the shelf label ID in the list stored in the storage unit 204, it is determined that the handy terminal 105 is authorized to make the change. On the other hand, when the set of the terminal identification number and the shelf label ID that are contained in the change request transmitted from the handy terminal 105 does not match with the set of the terminal identification number and the shelf label ID in the list stored in the storage unit 204, it is determined that the handy terminal 105 is not authorized to make the change.

When the handy terminal 105 is authorized to make the change, the control unit 203 of the communication controller 102 updates the price indicated by the product master data stored in the storage unit 204 as the price indicated by the price information contained in the change request transmitted from the handy terminal 105. At the same time, in order to change the contents of the product master data stored in the storage unit of the server 101 as well in a similar manner, the control unit 203 of the communication controller 102 transmits a change request containing the changed price information and the shelf label ID to the server 101 (Step S803). Subsequently, the control unit 203 of the communication controller 102 transmits a change-enabled message to the control unit 603 of the handy terminal 105 (Step S804), and the processing ends. When it is determined in Step S802 that the handy terminal 105 is not authorized to make the change, the control unit 203 of the communication controller 102 transmits a change-disabled message to the control unit 603 of the handy terminal 105 (Step S805), and the processing ends.

Next, description is given of processing of the shelf label 104. The reception unit 502 of the shelf label 104 receives the changed price information from the communication unit B 606 of the handy terminal 105. The control unit 504 of the shelf label 104 changes the price information displayed on the display unit 503, based on the changed price information received by the reception unit 502.

Through the above-mentioned procedure, the display of the electronic shelf label can be changed in the place where the electronic shelf label is installed. Further, the store staff member can flexibly change the display price of the electronic shelf label device. Still further, the store staff member can change the display of the electronic shelf label without going back and forth between a sales floor and a back office, resulting in reduction in loads on the store staff. Still further, because the display of the electronic shelf label can be changed flexibly, customers do not become confused about the display information.

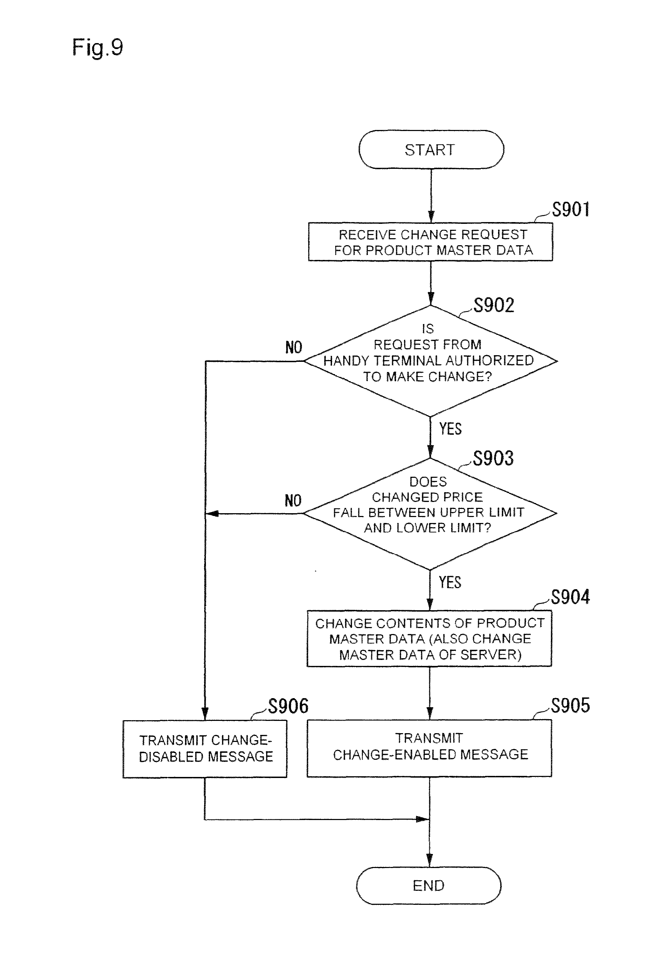

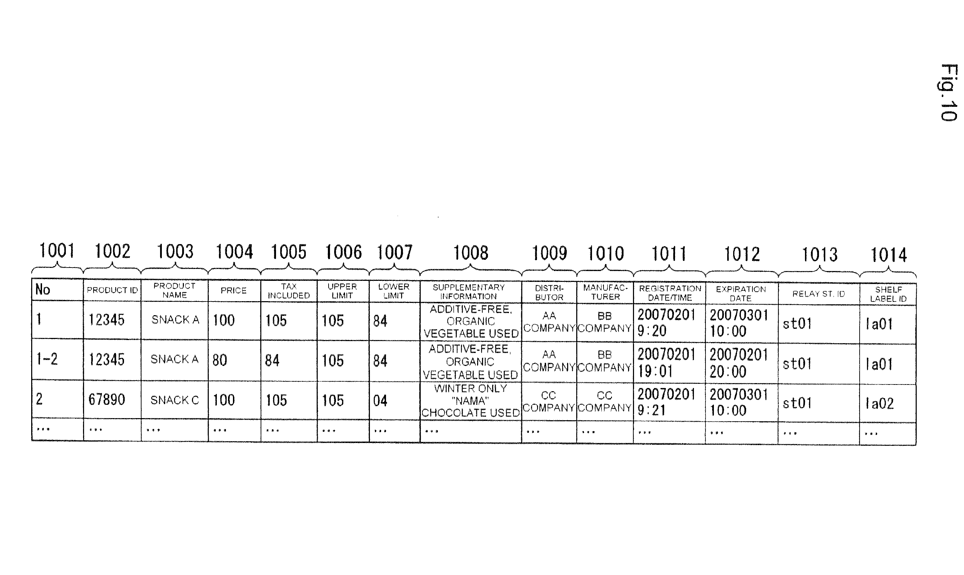

Next, referring to FIGS. 9 and 10 as appropriate, description is given of a markup/markdown limiting function for a product. FIG. 10 is a table of product master data in a case of using the markup/markdown limiting function for a product. An upper limit 1006 is an upper limit price that can be set. A lower limit 1007 is a lower limit price that can be set. Processing of the handy terminal 105 and processing of the shelf label 104 are the same as those in the procedure of changing the display of the shelf label 104 by using the handy terminal 105, and therefore processing of the communication controller 102 is described below.

First, the communication unit 207 of the communication controller 102 receives the change request transmitted from the communication unit A 605 of the handy terminal 105 (Step S901). Subsequently, the control unit 203 of the communication controller 102 determines whether or not the handy terminal 105 that has transmitted the change request is authorized to make the change (Step S902). The determination method is the same as that in Step S802 of FIG. 8. Subsequently, when the handy terminal 105 is authorized to make the change, the control unit 203 of the communication controller 102 determines whether or not the changed price falls between the upper limit price 1006 and the lower limit price 1007 in the product master data (Step S903). When the changed price falls between the upper limit price and the lower limit price, the control unit 203 of the communication controller 102 updates the price indicated by the product master data stored in the storage unit 204 as the price indicated by the price information contained in the change request transmitted from the handy terminal 105. At the same time, in order to change the contents of the product master data stored in the storage unit of the server 101 as well based on the change information, the control unit 203 of the communication controller 102 transmits a change request containing the changed price information and the shelf label ID to the server 101 (Step S904). Subsequently, the control unit 203 of the communication controller 102 transmits a change-enabled message to the control unit 603 of the handy terminal 105 (Step S905), and the processing ends. When it is determined in Step S902 that the handy terminal 105 is not authorized to make the change, the control unit 203 of the communication controller 102 transmits a change-disabled message to the control unit 603 of the handy terminal 105 (Step S906), and the processing ends. When it is determined in Step S903 that the changed price does not fall between the upper limit price and the lower limit price in the product master data, the control unit 203 of the communication controller 102 transmits a change-disabled message to the control unit 603 of the handy terminal 105 (Step S906), and the processing ends.

Through the above-mentioned procedure, the display of the electronic shelf label can be changed without setting an unintended price.

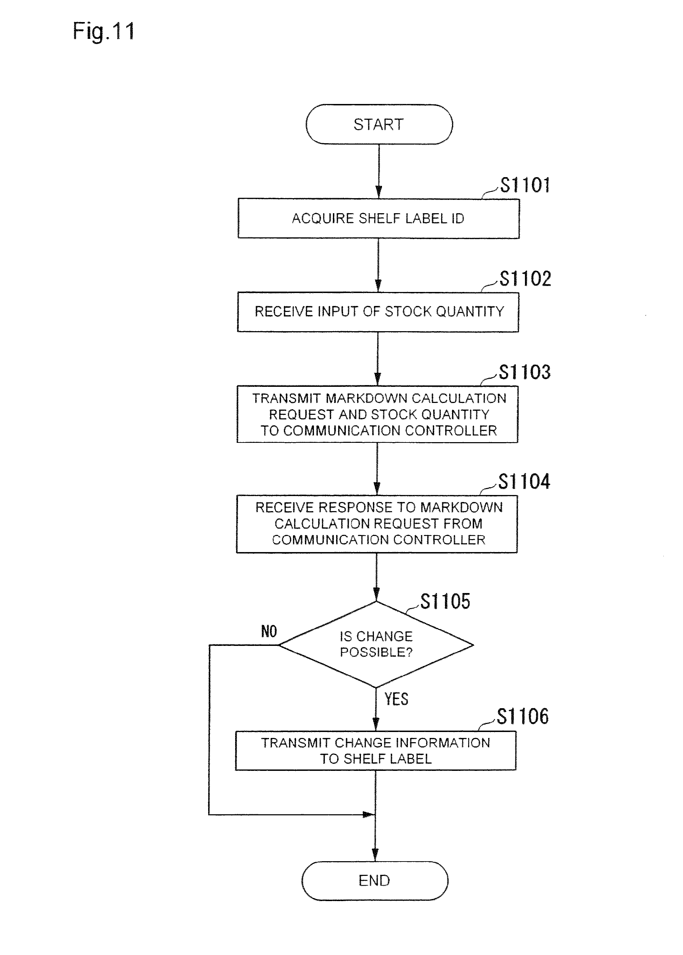

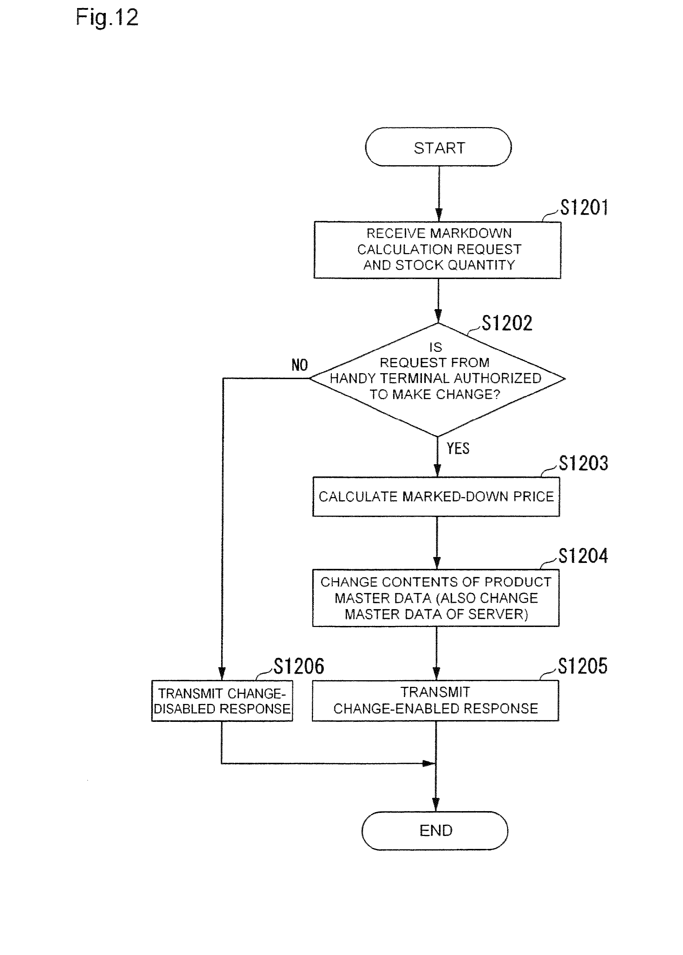

Next, referring to FIGS. 11 and 12 as appropriate, description is given of a markdown calculation function of calculating a marked-down price of a product. Referring to FIG. 11, description is first given of processing of the handy terminal 105. First, the reading unit 609 of the handy terminal 105 reads the barcode of the shelf label 104 that is to undergo the change of display, to thereby acquire the ID for identification (Step S1101). Subsequently, the input unit 608 receives input of a stock quantity (Step S1102). Subsequently, the control unit 603 transmits the stock quantity received by the input unit 608 and a markdown calculation request containing the ID for identification read in Step S1101 and the terminal identification number of the handy terminal 105 via the communication unit A 605 to the communication controller 102. Subsequently, the control unit 603 receives a response message to the markdown calculation request via the communication unit A 605 from the communication controller 102 (Step S1104). Subsequently, the control unit 603 determines whether or not the change can be made, based on the response message received from the communication controller 102 (Step S1105). When the response message indicates that the change can be made, the communication unit B 606 transmits the price information to the shelf label 104 (Step S1106), and the processing ends. When the response message indicates that the change cannot be made, the processing ends.

Next, referring to FIG. 12, description is given of processing of the communication controller 102. First, the communication unit 207 of the communication controller 102 receives the markdown calculation request transmitted from the communication unit A 605 of the handy terminal 105 (Step S1201). Subsequently, the control unit 203 of the communication controller 102 determines whether or not the handy terminal 105 that has transmitted the calculation request is authorized to make the change (Step S1202). The determination method is the same as that in Step S802 of FIG. 8. When the handy terminal 105 is authorized to make the change, the control unit 203 of the communication controller 102 calculates a marked-down price based on a calculation expression for determining a marked-down product price from the stock quantity and a period of time before closing (Step S1203). At this time, for example, a table in which the stock quantity, the period of time before closing, and the marked-down product price are associated with one another may be stored in advance, and by using this table, the marked-down product price corresponding to the stock quantity and the period of time before closing may be read from the table.

Subsequently, the control unit 203 of the communication controller 102 updates the price indicated by the product master data stored in the storage unit 204 as the marked-down price calculated in Step S1203. At the same time, in order to update the contents of the product master data stored in the storage unit of the server 101 as well in a similar manner, the control unit 203 of the communication controller 102 transmits a change request containing the marked-down price information and the shelf label ID to the server 101 (Step S1204). Subsequently, the control unit 203 of the communication controller 102 transmits a change-enabled message and the marked-down price information to the control unit 603 of the handy terminal 105 (Step S1205), and the processing ends. When it is determined in Step S1202 that the handy terminal 105 is not authorized to make the change, the control unit 203 of the communication controller 102 transmits a change-disabled message to the control unit 603 of the handy terminal 105 (Step S1206), and the processing ends.

Next, description is given of processing of the shelf label 104. The reception unit 502 of the shelf label 104 receives the marked-down price information from the communication unit B 606 of the handy terminal 105. The control unit 504 of the shelf label 104 changes the display content of the display unit 503, based on the marked-down price information received by the reception unit 502.

Note that, in this embodiment, the display content of the shelf label 104 is changed through the handy terminal 105, but the display content of the shelf label 104 may be changed through the communication controller 102. Specifically, instead of transmitting the change-enabled message for the display content from the communication controller 102 to the handy terminal 105 in Step S804, the communication controller 102 may transmit the changed price information to the shelf label 104. Then, the reception unit 502 of the shelf label 104 may receive the price information transmitted from the communication unit 207 of the communication controller 102, and based on the price information, the control unit 504 may change the price information displayed on the display unit 503.

Through the above-mentioned procedure, the automatic calculation for marked-down price can be executed, and thus the display of the electronic shelf label can be changed.

Hereinabove, the procedure of changing the display content of the shelf label 104 by using the handy terminal 105 has been described as an example. Further, after the display content of the shelf label 104 is changed in Step S706 or after the input of the change information is received in Step S702, information on the change of the price information (information containing the price information, the ID for identification or the product ID, and the terminal identification number of the handy terminal 105) may be transmitted from the handy terminal 105 to a POS cash register (not shown) for checkout, which is installed in the store or the like, to thereby cause the POS cash register to change the price information of the product that is stored in the POS cash register itself for the checkout processing. Further, along with the change, the POS cash register may be caused to request the change of the product master data of the server 101.

In general, there are many cases where the POS system (system constituted by the server 101 and the POS cash register) is already installed in a store. In a case where an electronic shelf label system including the communication controller 102, the relay station, the shelf label 104, the handy terminal 105, the display 106, and the like is installed in addition to the existing server 101, there is technical difficulty in many aspects about connection between the server 101 and the communication controller 102, and linkage of applications, data, and the like. Therefore, there are many cases where a POS system connectable to the electronic shelf label system is newly installed for installation of the electronic shelf label system. However, such a measure is highly costly, and therefore the POS system and the electronic shelf label system are installed independently of each other in a store in some cases.

According to the present invention, the information on the change of the price information is transmitted from the handy terminal 105 to the POS cash register, and hence the POS cash register can be caused to change the price information stored in the POS cash register, even if the POS system and the electronic shelf label system are installed independently of each other. Further, the information on the change of the price information can be transmitted and reflected through the POS cash register to the server 101.

Note that, in the case where the printing unit 610 is mounted on the handy terminal 105, the information on the change of the price information may be printed (printed as character information or printed in the form of a code such as a barcode or a QR code) in addition to the discount information and the like, and the POS cash register may be caused to read the printed information on the change of the price information. Then, based on the information on the change of the price information, the POS cash register may be caused to change the price information stored for the checkout processing. Further, the POS cash register may be caused to request the change of the product master data of the server 101.

In this manner, when a customer brings a product with a discount sticker to the POS cash register and checkout processing for the product is conducted at the POS cash register, information on the change of the price information of the product can be reflected to the POS cash register and the server 101.

Hereinabove, the embodiment of the present invention has been described in detail with reference to the drawings, but the specific configuration, program, and system are not limited to this embodiment, and the present invention also encompasses design that does not depart from the gist of the present invention.

There may be recorded on a computer-readable recording medium a program for implementing the functions of the communication controller 102 and the handy terminal 105 illustrated in FIG. 1. A computer system may read and execute the program recorded on the recording medium, to thereby perform the change of display of the shelf label. Note that, the "computer system" herein may include an OS and hardware such as peripheral devices.

In a case where the "computer system" utilizes a WWW system, the "computer system" also includes a homepage providing environment (or display environment). The "computer-readable recording medium" refers to a portable medium such as a flexible disk, a magneto-optical disk, a ROM, a writable non-volatile memory such as a flash memory, or a CD-ROM, or a storage device such as a hard disk integrated in the computer system.

The "computer-readable recording medium" also includes a medium for holding a program for a given period of time, such as a volatile memory (for example, dynamic random access memory (DRAM)) in a computer system serving as a server or a client in the case where the program is transmitted through a network such as the Internet or a communication line such as a telephone line.

Further, the above-mentioned program may be transmitted from a computer system that stores this program in a storage device or the like to another computer system via a transmission medium or by using a carrier wave within the transmission medium. In this case, the "transmission medium" for transmitting the program refers to a medium having a function of transmitting information, as exemplified by a network (communication network) such as the Internet or a communication line such as a telephone line. The above-mentioned program may implement only part of the functions described above. Further, the above-mentioned program may be a so-called differential file (differential program) capable of implementing the functions described above in combination with a program that is already recorded in the computer system.

## Claims

1. An electronic shelf label system, comprising:
an electronic shelf label device for displaying price information of a product;
a portable terminal device for inputting the price information; and
a product price management device for managing the price information,
wherein the product price management device comprises:
storage means for storing identification information of the electronic shelf label device and the price information in association with each other;
first reception means for receiving the identification information and the price information from the portable terminal device;
update means for updating, in the price information stored in the storage means, a piece of the price information associated with the same identification information as the identification information received by the first reception means, as the price information received by the first reception means; and
first transmission means for transmitting the price information updated by the update means to the electronic shelf label device,
wherein the portable terminal device comprises:
reading means for reading the identification information from the electronic shelf label device;
input means for inputting the price information; and
second transmission means for transmitting the identification information and the price information to the product price management device, and
wherein the electronic shelf label device comprises:
second reception means for receiving the price information transmitted from the product price management device; and
display means for displaying the price information received by the second reception means.

2. An electronic shelf label system, comprising:
an electronic shelf label device for displaying price information of a product;
a portable terminal device for inputting the price information; and
a product price management device for managing the price information,
wherein the product price management device comprises:
storage means for storing identification information of the electronic shelf label device and the price information in association with each other;
first reception means for receiving the identification information and the price information from the portable terminal device; and
update means for updating, in the price information stored in the storage means, a piece of the price information associated with the same identification information as the identification information received by the first reception means, as the price information received by the first reception means,
wherein the portable terminal device comprises:
reading means for reading the identification information from the electronic shelf label device;
input means for inputting the price information;
first transmission means for transmitting the identification information and the price information to the product price management device; and
second transmission means for transmitting the price information to the electronic shelf label device, and
wherein the electronic shelf label device comprises:
second reception means for receiving the price information transmitted from the portable terminal device; and
display means for displaying the price information received by the second reception means.

3. A product price management device, comprising:
storage means for storing price information of a product, which is displayed on an electronic shelf label device, and identification information of the electronic shelf label device in association with each other;
reception means for receiving the identification information and the price information from a portable terminal device for inputting the price information; and
update means for updating, in the price information stored in the storage means, a piece of the price information associated with the same identification information as the identification information received by the reception means, as the price information received by the reception means.

4. A product price management device according to claim 3, further comprising transmission means for transmitting the price information updated by the update means to the electronic shelf label device.

5. A portable terminal device, comprising:
reading means for reading, from an electronic shelf label device for displaying price information of a product, identification information of the electronic shelf label device;
input means for inputting the price information; and
first transmission means for transmitting the identification information and the price information to a product price management device for managing the price information.

6. A portable terminal device according to claim 5, further comprising second transmission means for transmitting the price information input to the input means to the electronic shelf label device.

7. An electronic shelf label device, comprising:
reception means for receiving price information of a product, which is transmitted from a portable terminal device for inputting the price information; and
display means for displaying the price information received by the reception means.

8. A product price management method for a product price management device for managing price information of a product, the product price management method comprising:
a reception step of receiving identification information of an electronic shelf label device for displaying the price information of the product, and the price information from a portable terminal device for inputting the price information; and
an update step of updating, in the price information stored in storage means for storing the identification information and the price information in association with each other, a piece of the price information associated with the same identification information as the identification information received in the reception step, as the price information received in the reception step.

9. A product price management method according to claim 8, further comprising a transmission step of transmitting the price information updated in the update step to the electronic shelf label device.

10. A product price update method for a portable terminal device for inputting price information of a product, the product price update method comprising:
a reading step of reading, from an electronic shelf label device for displaying the price information of the product, identification information of the electronic shelf label device;
an input step of inputting the price information; and
a first transmission step of transmitting the identification information and the price information to a product price management device for managing the price information.

11. A product price update method according to claim 10, further comprising a second transmission step of transmitting the price information input in the input step to the electronic shelf label device.

12. A product price management program for causing a computer to function as:
storage means for storing price information of a product, which is displayed on an electronic shelf label device, and identification information of the electronic shelf label device in association with each other;
reception means for receiving the identification information and the price information from a portable terminal device for inputting the price information; and
update means for updating, in the price information stored in the storage means, a piece of the price information associated with the same identification information as the identification information received by the reception means, as the price information received by the reception means.

13. A product price management program according to claim 12, further causing the computer to function as transmission means for transmitting the price information updated by the update means to the electronic shelf label device.

14. A product price update program for causing a computer to function as:
reading means for reading, from an electronic shelf label device for displaying price information of a product, identification information of the electronic shelf label device;
input means for inputting the price information; and
first transmission means for transmitting the identification information and the price information to a product price management device for managing the price information.

15. A product price update program according to claim 14, further causing the computer to function as second transmission means for transmitting the price information input to the input means to the electronic shelf label device.
